(19) Europäisches Patentamt

European Patent Office

Office européen des brevets

(11) Numéro de publication: **0 336 334 B1**

(12) **FASCICULE DE BREVET EUROPEEN**

(45) Date de publication de fascicule du brevet: **08.12.93** (51) Int. Cl.⁵: **G02B 5/30**, G02B 27/28

(21) Numéro de dépôt: **89105806.7**

(22) Date de dépôt: **03.04.89**

(54) **Polariseur à couches diélectriques.**

(30) Priorité: **08.04.88 FR 8804671**

(43) Date de publication de la demande:
**11.10.89 Bulletin 89/41**

(45) Mention de la délivrance du brevet:
**08.12.93 Bulletin 93/49**

(84) Etats contractants désignés:
**AT BE CH DE ES FR GB IT LI NL SE**

(56) Documents cités:
**FR-A- 2 246 882**
**US-A- 2 399 860**
**US-A- 2 403 731**
**US-A- 4 627 688**

(73) Titulaire: **ALCATEL CIT**
**12 Rue de la Baume**
**F-75008 Paris(FR)**

(72) Inventeur: **Mouchart, Jacques**
**34, avenue du Général Leclerc**
**F-94240 l'Hay Les Roses(FR)**
Inventeur: **Begel, Jacqueline**
**142, Chemin Croix Rouge Fer**
**Longpont Sur Orge F-91310 Montlhery(FR)**
Inventeur: **Duda, Eugène**
**Résidence du Clos d'Alençon, Bât. B2**
**F-91140 Villebon sur Yvette(FR)**

(74) Mandataire: **Weinmiller, Jürgen et al**
**Lennéstrasse 9**
**Postfach 24**
**D-82336 Feldafing (DE)**

EP 0 336 334 B1

## Description

La présente invention concerne la réalisation d'un polariseur, c'est-à-dire, et plus particulièrement, d'un dispositif apte, lorsqu'il reçoit un faisceau lumineux non polarisé ou présentant une polarisation quelconque, à le séparer en deux faisceaux de sortie polarisés linéairement selon deux directions distinctes prédéterminées.

Les polariseurs à couches diélectriques du genre cube polariseur sont bien connus dans le domaine optique depuis une quarantaine d'années.

Ils ont été inventés par Mac Neille et fabriqués par Banning (voir les documents 1-2 dont les références bibliographiques sont indiquées à la fin de la présente description). Ils dirigent selon deux directions de propagation perpendiculaires les deux composantes s et p du faisceau lumineux incident. Ces composantes sont celles dont les directions de vibration du champ électrique sont respectivement perpendiculaire et parallèle au plan d'incidence de ce faisceau. Ces polariseurs utilisent le fait que la réflexion et la transmission de la lumière à travers un empilement de couches minces déposées sur un support traversé en incidence oblique sont différentes suivant la direction de vibration de la lumière incidente.

Ils se présentent sous la forme d'un cube qui est généralement constitué de verre et qui est coupé selon un plan passant par deux arêtes opposées pour faire apparaître deux faces obliques en regard dites faces hypoténuses. Une au moins de ces faces est revêtue d'un empilement polarisant. L'angle des deux prismes qui forment le cube est de 45 degrés, ce qui nécessite que ces prismes soient collés par leurs faces hypoténuses pour éviter la réflexion totale de la lumière sur l'une de ces faces à l'intérieur du cube. Les faces d'entrée et de sortie du cube sont généralement traitées antireflet.

L'empilement polarisant est habituellement constitué de couches alternées à haut et bas indices $n_H$ et $n_B$. Les conditions que doivent vérifier entre eux les indices des couches déposées et l'indice $n_O$ du substrat constitué par le ou les prismes portant ces couches sont indiquées dans la littérature (voir documents 1 à 4) pour des couches dont les épaisseurs optiques sont en quart d'onde en incidence oblique.

Une couche est dite en quart d'onde pour une lumière d'une certaine longueur d'onde reçue sous une certaine incidence lorsque les deux fractions de cette lumière qui sont réfléchies sur les deux faces de cette couche se retrouvent en opposition de phase. Une couche d'épaisseur moitié est dite en huitième d'onde.

Pour qu'un polariseur soit efficace, il est nécessaire que la transmission $T_p$, relativement à la vibration p, soit proche de l'unité et que sa transmission $T_s$, relativement à la vibration s, soit pratiquement nulle. Couramment un bon polariseur doit présenter une transmission $T_p$ d'au moins 0,97 et une transmission $T_s$ inférieure à $10^{-2}$, ce qui correspond à un taux de blocage de 20dB ou plus pour la vibration s.

On connaît des polariseurs multidiélectriques qui sont efficaces dans un domaine spectral étendu. Malheureusement ils ne le sont que dans un faible champ angulaire, qui est typiquement inférieur à + 2 degrés à partir de l'incidence normale par rapport à la face avant du cube polariseur. Plus précisément on observe pour la vibration p, une perte d'insertion supérieure à 0,5dB dès que l'angle d'incidence sur la face avant du polariseur dépasse 2 degrés. Une telle perte est excessive.

La présente invention a notamment pour but de réaliser un polariseur à couches diélectriques qui évite une perte excessive de transmission de la vibration p quand l'angle d'incidence du faisceau à polariser varie de plus de 2 degrés alors que l'étendue spectrale de ce faisceau est limitée. Elle a aussi pour but de réaliser des polariseurs présentant un champ angulaire d'efficacité important, de l'ordre de ± 10 degrés pour une lumière sensiblement monochromatique. De tels polariseurs peuvent être appelés polariseurs grand champ.

Parmi les applications possibles des polariseurs grand champ on citera le cas de la polarisation d'un faisceau de lumière infrarouge issu d'un laser semi-conducteur émettant une longueur d'onde de 1,3 ou 1,55 micromètre. Un tel faisceau présente l'avantage d'être monochromatique. Mais il présente aussi l'inconvénient d'une divergence de plusieurs degrés. Si on utilise un polariseur connu du type Mac Neille il est nécessaire d'adjoindre un système de lentilles qui collimate le faisceau laser avant qu'il traverse le polariseur. L'emploi d'un polariseur grand champ permet d'éliminer le dispositif collimateur, ce qui conduit à un ensemble plus compact, moins coûteux et qui minimise les pertes d'insertion.

Dans les buts indiqués ci-dessus la présente invention a pour objet un polariseur à couches diélectriques pour polariser une lumière présentant une longueur d'onde prédéterminée, ce polariseur comportant

- des moyens d'entrée pour former ou transmettre un faisceau incident qui est constitué de ladite lumière et dont les rayons ont des directions voisines d'une direction d'incidence prédéterminée,
- un substrat transparent présentant, sur le trajet de ce faisceau incident, une face oblique par rapport à cette direction d'incidence,
- et un empilement polarisant formé sur cette face oblique et constitué de couches diélectriques minces, ces couches étant des couches polarisantes à premier et deuxième indices qui présentent un premier et un deuxième indices de réfraction pour ladite lumière et qui se succèdent alternativement à partir de cette face oblique avec des épaisseurs différentes, la succession de ces couches présentant la forme d'une succession périodique de séquences de base dont chacune est constituée par plusieurs couches diélectriques minces présentant ces premier et deuxième indices de manière alternée, ces séquences étant identiques les unes aux autres quant aux indices et aux épaisseurs des couches qui les constituent,

- ladite direction d'incidence formant, avec la direction perpendiculaire à ladite face oblique et auxdites couches polarisantes, un angle d'incidence qui est situé dans un plan d'incidence et qui a une valeur telle que, compte tenu de ladite longueur d'onde et desdits indices et épaisseurs des couches polarisantes, ledit empilement polarisant sépare ledit faisceau incident en un faisceau transmis et un faisceau réfléchi de polarisations croisées,

- ce polariseur étant caractérisé par le fait que ladite séquence de base est une séquence symétrique constituée d'une dite couche polarisante à deuxième indice présentant une épaisseur optique à deuxième indice et de deux couches élémentaires à premier indice situées de part et d'autre de cette couche à deuxième indice et présentant une même épaisseur : dont le double constitue une épaisseur optique à premier indice, de sorte que deux telles couches élémentaires à premier indice s'unissent à chaque interface entre deux séquences de bases consécutives pour former une dite couche polarisante à premier indice, présentant ladite épaisseur optique à premier indice.

Il en résulte que ledit empilement polarisant forme une succession symétrique desdites couches polarisantes. Cette succession commence et finit par deux dites couches à premier indice à demi épaisseur et elle est constituée dans l'intervalle par desdites couches polarisantes à deuxième indice et à premier indice à épaisseur entière qui se succèdent alternativement en commençant et en finissant par une couche à deuxième indice.

Selon l'invention on peut adopter de plus, lorsque les circonstances s'y prêtent, certaines dispositions préférées. Selon l'une de ces dispositions, dans le cas où lesdits premier et deuxième indices sont respectivement bas et haut, une épaisseur de base W est donnée, à partir d'une proportion d'indice bas P, par une égalité

$$1/W = 1,92 - 0,77 \, P,$$

- cette épaisseur de base W étant une épaisseur totale relative $W_1/W_o$ et étant égale au rapport de l'épaisseur optique totale $w_1 = 2ne_B + ne_H$ de ladite séquence de base à une épaisseur de référence $W_o$,

- cette proportion d'indice bas P étant une proportion relative $P_1/P_O$ des épaisseurs optiques à bas indice, étant déduite de la proportion totale $P_1 = 2ne_B/(2ne_B + ne_H)$ des épaisseurs optiques $2ne_B$ desdites couches à bas indice dans les épaisseurs optiques $2ne_B + ne_H$ de ladite séquence de base, et étant égale au rapport $P_1/P_O$ de cette proportion totale $P_1$ à une proportion de référence $P_O$,

- cette épaisseur de référence $W_O$ et cette proportion de référence $P_O$ étant définies sur un polariseur de référence qui est un dit polariseur à couches diélectriques dans lequel lesdites couches polarisantes à haut indice et à bas indice à épaisseur entière sont des couches en quart d'onde pour ladite lumière et pour ledit angle d'incidence $A_O$, cette épaisseur de référence $W_O$ et cette proportion de référence $P_O$ étant l'épaisseur optique totale $2ne_{BO} + ne_{HO}$ et la proportion totale des épaisseurs optiques à bas indice $2ne_{BO}/(2ne_{BO} + ne_{HO})$, respectivement, dans ladite séquence de base dudit polariseur de référence.

L'égalité ci-dessus peut être utilisée de la manière suivante dans le cas où l'empilement polarisant du polariseur de référence est situé dans la masse d'un bloc transparent d'indice de réfraction $n_o$. On choisit les matériaux, donc les indices de réfraction $n_B$ et $n_H$, desdites couches polarisantes à bas et haut indices, respectivement. On choisit aussi ledit angle d'incidence $A_o$. Les épaisseurs optiques desdites couches polarisantes à bas indice à épaisseur entière $2ne_{Bo}$ et à haut indice en quart d'onde sont alors obtenues en multipliant ladite longueur d'onde par les facteurs suivants, respectivement

$$0{,}25 \, (1 - n_o^2 \sin^2 A_o / n_B^2)^{-1/2} \quad \text{et}$$

$$0{,}25 \, (1 - n_o^2 \sin^2 A_o / n_H^2)^{-1/2}$$

Ces épaisseurs optiques étant calculées ladite épaisseur de référence et ladite proportion de référence sont données par les égalités

$W_o = 2ne_{BO} + ne_{HO}$

$P_o = 2ne_{BO}/W_o$

A partir de ces valeurs, le choix d'une proportion relative d'indice bas P définit une épaisseur relative de base W, donc des épaisseurs optiques $2ne_B$ et $ne_H$ des couches polarisantes, c'est-à-dire que la séquence de base est entièrement définie.

Selon deux autres dites dispositions préférées cette proportion d'indice bas P est comprise entre 0,8 et 1,5, et ledit angle d'indicence $A_O$ est compris entre 20 et 70 degrés.

A l'aide des figures schématiques ci-jointes, on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence. Le mode de mise en oeuvre donné en exemple comporte les dispositions préférées mentionnées ci-dessus. Il doit être compris que les éléments mentionnés peuvent être remplacés par d'autres éléments assurant les mêmes fonctions techniques.

La figure 1 représente une vue en coupe d'un polariseur selon l'invention.

La figure 2 représente un détail II de la figure 1 à échelle agrandie.

Les figures 3 et 4 représentent chacune trois diagrammes de transmission d'une vibration lumineuse à polarisation s pour la figure 3 et à polarisation p pour la figure 4.

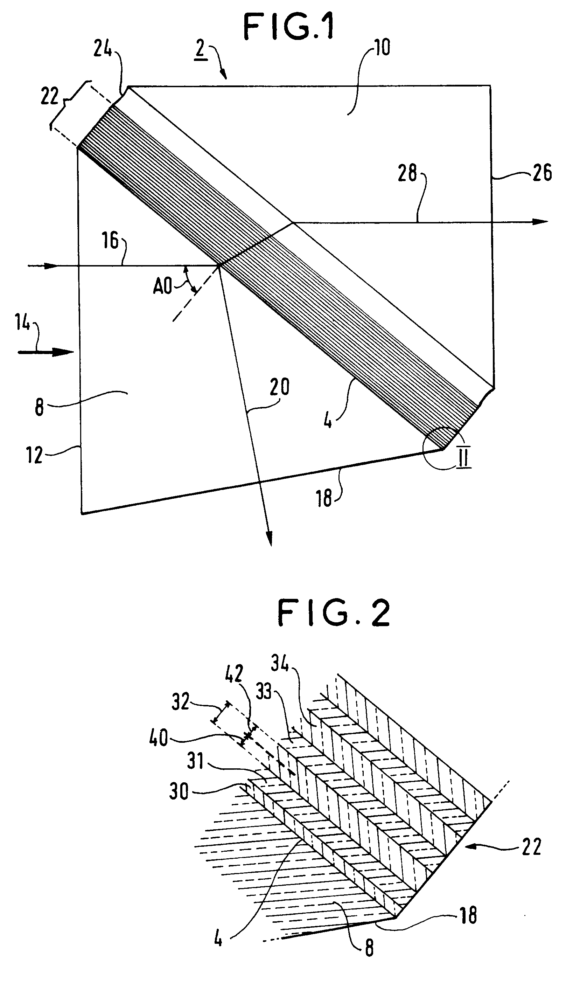

Conformément à la figure 1 le polariseur donné en exemple comporte

- une face d'entrée 12 sensiblement perpendiculaire à ladite direction d'incidence 14 pour constituer lesdits moyens d'entrée transmettant à l'intérieur de ce bloc ledit faisceau incident 16,
- une face de sortie en transmission 26 située sur le trajet dudit faisceau transmis 28,
- et une face de sortie en réflexion 18 située sur le trajet dudit faisceau réfléchi 20,
- l'une au moins desdites faces de sortie 26, 18 étant sensiblement perpendiculaire audit faisceau transmis ou réfléchi sur le trajet duquel elle est située.

Pour réaliser ladite face oblique 4 ce bloc est constitué de deux prismes 8 et 10. Ces prismes sont constitués d'un même verre qui est choisi pour ne présenter aucune biréfringence. Le prisme 8 comporte ladite face d'entrée 12 qui est perpendiculaire à ladite direction d'incidence 14. Cette dernière est aussi celle du faisceau incident 16 et elle est représentée horizontale. Ce prisme constitue ledit substrat et porte la face oblique 4 et une face de sortie en réflexion 18 qui est choisie de préférence perpendiculaire audit faisceau réfléchi 20 si celui-ci doit être utilisé. Sur cette face oblique est formé ledit empilement polarisant 22. Le prisme 10 est fixé sur cet empilement par une couche de colle 24. Il présente une face de sortie en transmission 26 qui est de préférence perpendiculaire au faisceau transmis 28 si celui-ci doit être utilisé.

La couche de colle 24 a un indice de réfraction voisin de, et de préférence intermédiaire, entre celui des couches polarisantes à bas indice et celui du substrat. Ce dernier indice est de préférence intermédiaire entre celui des couches polarisantes à bas et haut indices de l'empilement 22. Des couches antireflets non représentées peuvent être déposées sur les faces d'entrée et de sortie 12, 18 et 26.

Conformément à la figure 2 l'empilement polarisant 22 comporte, à partir de la face oblique 4 du substrat 8, une couche à bas indice à demi épaisseur 30, une couche à haut indice 31, une couche à bas indice à épaisseur entière 32, une couche à haut indice 33, une couche à bas indice à épaisseur entière 34, et ainsi de suite alternativement jusqu'à une couche à haut indice, qui est suivie d'une couche terminale à bas indice à demi épaisseur non représentées. Chaque couche à bas indice à épaisseur entière telle que 32 peut être considérée comme l'addition de deux couches à bas indice à demi épaisseur telles que 40 et 42, de sorte que l'empilement 22 peut être considéré comme entièrement constitué par la succession de séquences de bases identiques telles que la séquence qui comporte les deux couches à bas indice à demi épaisseur 30 et 40 de part et d'autre de la couche à haut indice 31.

Les épaisseurs des couches individuelles peuvent sans perte sensible d'efficacité varier de manière aléatoire dans une proportion pouvant atteindre 10% à condition que l'épaisseur correcte précédemment indiquée de la séquence de base soit respectée, au moins en moyenne sur la hauteur de l'empilement, avec une précision de l'ordre de 2 à 3 %.

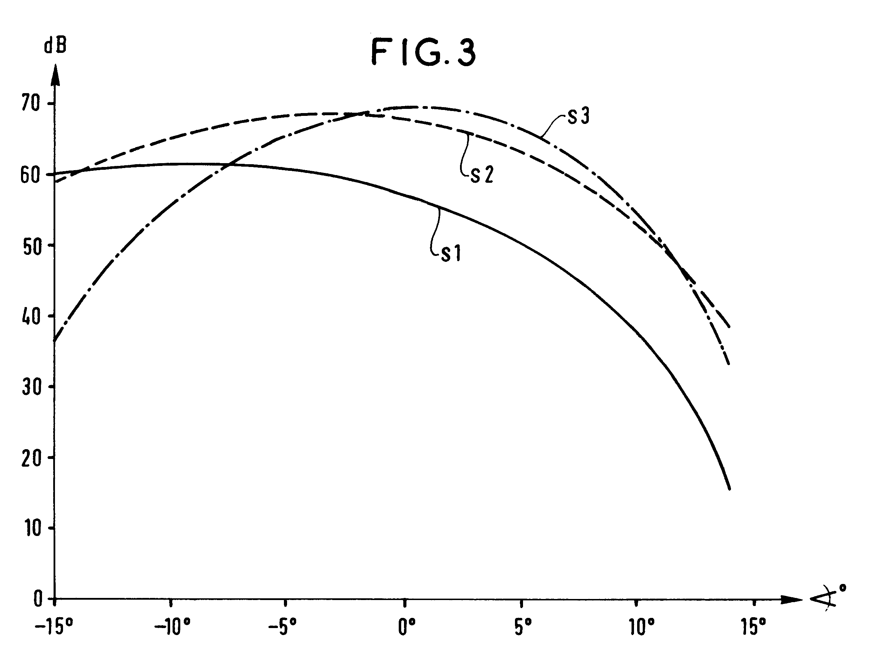

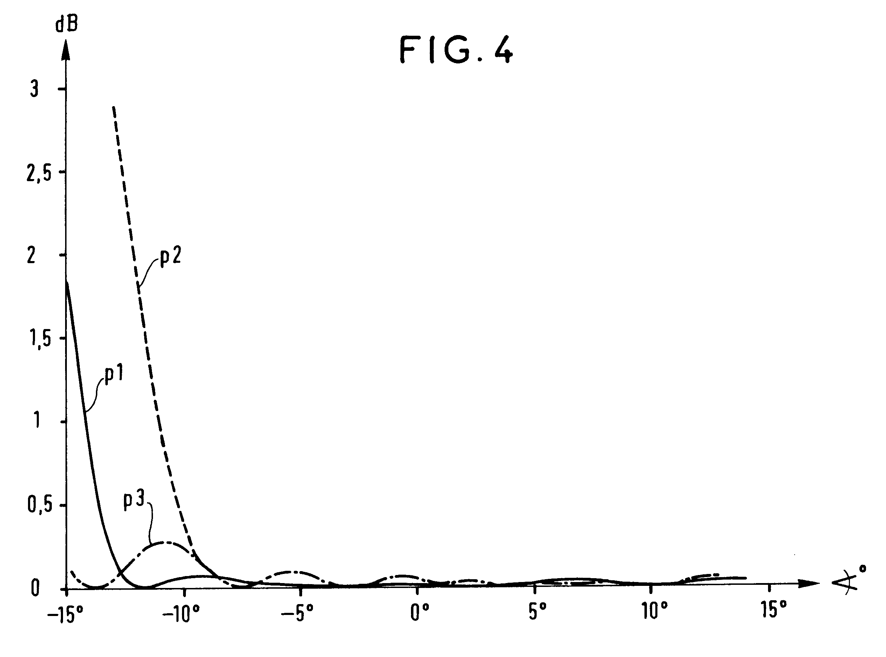

A titre indicatif les figures 3 et 4 représentent chacune trois diagrammes de transmission s1, s2, s3 et p1, p2, p3 exprimés en décibels pour les vibrations à polarisations s et p des faisceaux réfléchi et transmis dans trois cas C1, C2, C3 correspondant à trois dépôts similaires, respectivement. Ces dépôts ont été reproduits pour une longueur d'onde prise pour unité et réalisés avec les matériaux suivants :

$SiO_2$ pour les couches polarisantes à bas indice ($n_B = 1,45$),

$TiO_2$ pour les couches polarisantes à haut indice ($n_H = 2,2$), et verre D2050 de la Société Française SOVIREL pour le substrat ($n_o = 1,7$).

L'angle entre les faces d'entrée 12 et oblique 4 du prisme 8 valait 50 degrés.

4

Dans le cas C1, P = 1, (ne) $_B$ = 0,1944 et (ne)$_H$ = 0,2596

Dans le cas C2, P = 1,15, (ne)$_B$ = 0,2485 et (ne)$_H$ = 0,2237

Dans le cas C3, P = 1,30, (ne)$_B$ = 0,3162 et (ne)$_H$ = 0,1789

Le nombre des séquences de bases était de onze.

Sur les diagrammes on a porté en abscisses l'angle en degrés entre la direction de propagation d'un faisceau d'entrée extérieur et la perpendiculaire à la face d'entrée 12. Lorsque cet angle d'incidence d'entrée vaut par exemple 10 degrés l'angle d'incidence précédemment mentionné, A$_o$, qui est un angle d'incidence sur l'empilement, vaut 55,86 degrés.

Les documents suivants peuvent être utilement consultés pour la compréhension et la mise en oeuvre de la présente invention.

1 Mac Neille, S.M. "Beam splitter" U.S. specification 2403731 du 9 juillet 1946

2 Banning, M. "Practical methods of making and using multilayers filters", J. opt. Soc. Am, 37, P 792-797 (1947)

3 Macleod, H.A, Thin Film Optical Filters , second Edition, Macmillan Publishing Company (1986)

4 Netterfield, R,P "Practical thin film polarizing beam-splitters, Optica Acta, 24 p 69-79 (1977)

5 Mouchart, J. "Revêtements optiques à structure périodique. I : Fonctions caractéristiques", Appl. opt.20, P 4201-4206 (1981)

6 Herpin, A, C.R. Acad. Sci. 225, p 182 (1947).

**Revendications**

1. Polariseur à couches diélectriques pour polariser une lumière présentant une longueur d'onde prédéterminée, ce polariseur comportant :

   - des moyens d'entrée (12) pour former ou transmettre un faisceau incident qui est constitué de ladite lumière et dont les rayons ont des directions voisines d'une direction d'incidence prédéterminée,

   - un substrat (8) transparent présentant, sur le trajet de ce faisceau incident, une face (4) oblique par rapport à cette direction d'incidence,

   - et un empilement polarisant formé sur cette face oblique et constitué de couches diélectriques minces, ces couches étant des couches polarisantes à premier et deuxième indices qui présentent un premier et un deuxième indices de réfraction pour ladite lumière et qui se succèdent alternativement à partir de cette face oblique avec des épaisseurs différentes, la succession de ces couches présentant la forme d'une succession périodique de séquences de base dont chacune est constituée par plusieurs couches diélectriques minces présentant ces premier et deuxième indices de manière alternée, ces séquences étant identiques les unes aux autres quant aux indices et aux épaisseurs des couches qui les constituent,

   - ladite direction d'incidence formant, avec la direction perpendiculaire à ladite face oblique et auxdites couches polarisantes, un angle d'incidence qui est situé dans un plan d'incidence et qui a une valeur telle que, compte tenu de ladite longueur d'onde et desdits indices et épaisseurs des couches polarisantes, ledit empilement polarisant sépare ledit faisceau incident (16) en un faisceau transmis (28) et un faisceau réfléchi (20) de polarisations croisées,

   - ce polariseur étant caractérisé par le fait que ladite séquence de base est une séquence symétrique (30, 31, 40) constituée d'une dite couche polarisante à deuxième indice (31) présentant une épaisseur optique à deuxième indice ne$_H$ et de deux couches élémentaires à premier indice (30, 40) situées de part et d'autre de cette couche à deuxième indice et présentant une même épaisseur dont le double constitue une épaisseur optique à premier indice 2ne$_B$, de sorte que deux telles couches élémentaires à premier indice (40, 42) s'unissent à chaque interface entre deux séquences de bases consécutives pour former une dite couche polarisante à premier indice (32), présentant ladite épaisseur optique à premier indice.

2. Polariseur selon la revendication 1 dans lequel lesdits premier et deuxième indices sont des indices bas et haut, respectivement, et caractérisé en ce qu'une épaisseur de base W est donnée, à partir d'une proportion d'indice bas P, par une égalité

   1/W = 1,92 - 0,77 P,

   - cette épaisseur de base W étant une épaisseur totale relative w$_1$/w$_o$ et étant égale au rapport de l'épaisseur optique totale W$_1$ = 2ne$_B$ + ne$_H$ de ladite séquence de base (30, 31, 40) à une épaisseur de référence W$_o$,

   - cette proportion d'indice bas P étant une proportion relative P$_1$/P$_O$ des épaisseurs

optiques à bas indice, étant déduite de la proportion totale $P_1 = 2ne_B/(2ne_B + ne_H)$ des épaisseurs optiques $2ne_B$ desdites couches à bas indice (30, 40) dans les épaisseurs optiques $2ne_B + ne_H$ de ladite séquence de base, et étant égale au rapport $P_1/P_O$ de cette proportion totale $P_1$ à une proportion de référence $P_O$,

- cette épaisseur de référence $W_O$ et cette proportion de référence $P_O$ étant définies sur un polariseur de référence qui est un dit polariseur à couches minces dans lequel lesdites couches polarisantes à haut indice et à bas indice sont des couches en quart d'onde pour ladite lumière et pour ledit angle d'incidence $A_O$, cette épaisseur de référence $W_O$ et cette proportion de référence $P_O$ étant l'épaisseur optique totale $2ne_{BO} + ne_{HO}$ et la proportion totale des épaisseurs optiques à bas indice $2ne_{BO}/(2ne_{BO} + ne_{HO})$, respectivement, dans ladite séquence de base dudit polariseur de référence.

**3.** Polariseur selon la revendication 2, caractérisé par le fait que ladite proportion d'indice bas P est comprise entre 0,8 et 1,5.

**4.** Polariseur selon la revendication 3, caractérisé par le fait que ledit angle d'incidence $A_O$ est compris entre 20 et 70 degrés.

**5.** Polariseur selon la revendication 1, présentant la forme d'un bloc transparent (2) dans la masse duquel sont situées ladite face oblique (4) et ledit empilement polarisant (6), ce bloc comportant

- une face d'entrée (12) sensiblement perpendiculaire à ladite direction d'incidence (10) pour constituer lesdits moyens d'entrée transmettant à l'intérieur de ce bloc ledit faisceau incident (16),
- une face de sortie en transmision (26) située sur le trajet dudit faisceau transmis (28),
- et une face de sortie en réflexion (18) située sur le trajet dudit faisceau réfléchi (20),
- l'une au moins desdites faces de sortie (26, 18) étant sensiblement perpendiculaire audit faisceau transmis ou réfléchi sur le trajet duquel elle est située.

## Claims

**1.** A dielectric layer polarizer for polarizing light having a predetermined wavelength, said polarizer comprising:

inlet means (12) for forming or transmitting an incident beam which is constituted by said light and whose rays propagate along directions close to a predetermined direction of incidence;

a transparent substrate (8) having a face (4) on the path of said incident beam, said face being oblique relative to said direction of incidence; and

a polarizing stack formed on said oblique face and constituted by thin dielectric layers, said layers being first and second index polarizing layers presenting a first refractive index and a second refractive index for said light and following one another in alternation starting from said oblique face and having different thicknesses, with the succession of said layers being in the form of a periodic succession of base sequences, each of which is constituted by a plurality of thin dielectric layers alternating between said first and second indices, said sequences being identical to each other with respect to their indices and the thicknesses of the layers which constitute them;

said direction of incidence forming an angle of incidence with the direction perpendicular to said oblique face and to said polarizing layers, said angle of incidence being situated in a plane of incidence and having a value relative to said wavelength and to said indices and thicknesses of the polarizing layers such that said polarizing stack separates said incident beam (16) into a transmitted beam (28) and a reflected beam (20) with crossed polarizations;

said polarizer being characterized by the fact that said base sequence is a symmetrical sequence (30, 31, 40) constituted by one of said second index (31) polarizing layers having a second index optical thickness $ne_H$, and two first index elementary layers (30, 40) situated on either side of said second index layer and having the same thickness which, when doubled, constitutes a first index optical thickness $2ne_B$, such that pairs of said first index elementary layers (40, 42) combine at each interface between two consecutive base sequences in order to form one of said first index polarizing layers (32) having a said first index optical thickness.

**2.** A polarizer according to claim 2, in which said first and second indices are low and high indices respectively, the polarizer being characterized in that a base thickness W is given in terms of a low index proportion P, by the equation:

$1/W = 1.92 - 0.77P$;

said base thickness W comprising a total relative thickness $W_1/W_O$ and being equal to the ratio of the total optical thickness $W_1 = 2ne_B + ne_H$ of said base sequence (30, 31, 40) divided by a reference thickness $W_O$;

said low index proportion P being a relative proportion $P_1/P_O$ of the low index optical thicknesses deduced from the total proportion $P_1 = 2ne_B/[2ne_B + ne_H]$ of the optical thicknesses $2ne_B$ of said low index layers (30, 40) in the optical thickness $[2ne_B + ne_H]$ of said base sequence, and being equal to the ratio $P_1/P_O$ of said total proportion $P_1$ divided by a reference proportion $P_O$;

said reference thickness $W_O$ and said reference proportion $P_O$ being defined on a reference polarizer which is one of said thin layer polarizers in which high index polarizing layer and said full thickness index polarizing layer are quarterwave layers for said light and for said angle of incidence $A_O$, said reference thickness $W_O$ and said reference proportion $P_O$ being the total optical thickness $[2ne_{BO} + ne_{HO}]$ and the total proportion of the low index optical thicknesses $2ne_{BO}/[2ne_{BO} + ne_{HO}]$, respectively, in said base sequence of said reference polarizer.

3. A polarizer according to claim 3, characterized by the fact that said low index proportion P lies in the range 0.8 to 1.5.

4. A polarizer according to claim 4, characterized by the fact that said angle of incidence $A_O$ lies in the range 20° to 70°.

5. A polarizer according to claim 2, in the form of a transparent block (2) in which said oblique face (4) and said polarizing stack (6) are embedded, said block comprising:

an inlet face (12) substantially perpendicular to said direction of incidence (10) in order to constitute said inlet means transmitting said incident beam (16) into said block;

a transmission outlet face (26) situated on the path of said transmitted beam (28); and

a reflection outlet face (18) situated on the path of said reflected beam (20);

at least one of said outlet faces (26, 18) being substantially perpendicular to said transmitted or reflected beam on whose path it is situated.

**Patentansprüche**

1. Polarisator mit dielektrischen Schichten zur Polarisierung eines Lichts einer bestimmten Wellenlänge, wobei der Polarisator aufweist:

- Eingangsmittel (12), um einen einfallenden Lichtstrahl zu bilden oder zu übertragen, der das Licht darstellt und dessen Strahlen Richtungen in der Nähe einer vorgegebenen Einfallsrichtung besitzen,

- ein transparentes Substrat (8), das im Verlauf dieses einfallenden Strahls eine bezüglich der Einfallsrichtung schräge Fläche (4) bildet,

- und einen polarisierenden Stapel von Schichten, der auf dieser schrägen Fläche ausgebildet ist und aus dünnen dielektrischen Schichten besteht, die Schichten mit einem ersten bzw. zweiten Brechungsindex sind und für das Licht einen ersten und zweiten Brechungsindex bilden, wobei diese Schichten abwechselnd ausgehend von dieser schrägen Seite mit unterschiedlichen Dicken aufeinanderfolgen, wobei die Folge dieser Schichten eine periodische Folge von Basissequenzen bildet, die je aus mehreren dünnen dielektrischen Schichten bestehen und die abwechselnden ersten und zweiten Brechungsindices aufweisen, wobei diese Sequenzen einander gleichen, was die Indices und die Dicken der sie bildenden Schichten angeht,

- wobei die Einfallsrichtung mit der zur schrägen Seite und den polarisierenden Schichten senkrechten Richtung einen Einfallswinkel bildet, der in einer Einfallsebene liegt und einen solchen Wert hat, daß unter Berücksichtigung der Wellenlänge und der Brechungsindices und Dicken der polarisierenden Schichten dieser polarisierende Schichtenstapel den einfallenden Lichtstrahl (16) in einen Transmissionslichtstrahl (28) und einen Reflexionslichtstrahl (20) mit gekreuzten Polarisationen trennt,

dadurch gekennzeichnet, daß die Basissequenz eine symmetrische Sequenz (30, 31, 40) ist, die von einer polarisierenden Schicht mit einem zweiten Brechungsindex (31) und einer optischen Dicke $ne_H$ sowie von zwei Elementarschichten mit dem ersten Index (30, 40) gebildet wird, die zu beiden Seiten der Schicht mit dem zweiten Brechungsindex liegen und gleiche Dicken besitzen, deren Doppeltes eine optische Dicke $2ne_B$ der Schicht mit dem ersten Index beträgt, derart, daß zwei solche Elementarschichten mit dem ersten Index (40, 42) sich an jedem Übergang zwischen zwei aufeinanderfolgenden Basissequenzen vereinen, um eine polarisierende Schicht mit dem ersten Index (32) zu bilden, die die optische Dicke des ersten Index bildet.

2. Polarisator nach Anspruch 1, in dem der erste und der zweite Brechungsindex einen niedrigen bzw. hohen Wert besitzen, dadurch gekennzeichnet, daß eine Basisdicke W ausgehend von einem Anteil P des niedrigen Brechungsindex durch folgende Gleichung gegeben ist:

$$1/W = 1{,}92 - 0{,}77 \, P,$$

- wobei diese Basisdicke W eine relative Gesamtdicke $W_1/W_O$ ist und dem Verhältnis der optischen Gesamtdicke $W_1 = 2ne_B + ne_H$ der Basissequenz (30, 31, 40) zu einer Bezugsdicke $W_O$ gleich ist,
- wobei dieser Anteil P mit niedrigem Index ein relativer Anteil $P_1/P_O$ der optischen Dicken mit niedrigem Brechungsindex ist und aus dem Gesamtanteil $P_1 = 2ne_B/(2ne_B + ne_H)$ der optischen Dicken $2ne_B$ der Schichten mit niedrigem Brechungsindex (30, 40) in den optischen Dicken $2ne_B + 2ne_H$ der Basissequenz abgeleitet wird und wobei dieser Anteil gleich dem Verhältnis $P_1/P_O$ von diesem Gesamtanteil $P_1$ zu einem Bezugsanteil $P_O$ ist,
- wobei diese Bezugsdicke $W_O$ und dieser Bezugsanteil $P_O$ an einem Bezugspolarisator definiert sind, der ein Dünnschichtpolarisator ist, in dem die polarisierenden Schichten mit hohem und niedrigem Index Viertelwellenschichten für das Licht und für den Einfallswinkel $A_O$ sind, wobei die Bezugsdicke $W_O$ und der Bezugsanteil $P_O$ die optische Gesamtdicke $2ne_{BO} + ne_{HO}$ bzw. der Gesamtanteil der optischen Dicken mit niedrigem Index $2ne_{BO}/(2ne_{BO} + ne_{HO})$ in der Basissequenz des Bezugspolaristors sind.

3. Polarisator nach Anspruch 2, dadurch gekennzeichnet, daß der Anteil P mit niedrigem Brechungsindex zwischen 0,8 und 1,5 liegt.

4. Polarisator nach Anspruch 3, dadurch gekennzeichnet, daß der Einfallswinkel $A_O$ zwischen 20 und 70° liegt.

5. Polarisator nach Anspruch 1 in Form eines transparenten Blocks (2), in dessen Masse die schräge Seite (4) und der polarisierende Schichtenstapel (6) liegen, wobei dieser Block aufweist:
- eine im wesentlichen senkrecht zur Einfallsrichtung (10) verlaufende Eingangsfläche (12), die das den einfallenden Strahl (16) in den Block sendende Eingangsmittel bildet,
- eine Transmissionsausgangsfläche (26), die im Verlauf des durchgelassenen Lichtstrahls (28) liegt,
- und eine Reflexionsausgangsfläche (18), die im Verlauf des reflektierten Strahls (20) liegt,
- wobei mindestens eine der Ausgangsfläche (26, 18) im wesentlichen senkrecht zu dem übertragenen bzw. reflektierten Strahl verläuft, in dessen Weg sie sich befindet.

# FIG.1

# FIG.2

FIG.3

EP 0 336 334 B1

FIG. 4

EP 0 336 334 B1